# EUROPÄISCHE PATENTANMELDUNG

(11) **EP 1 813 179 A2**
(43) Veröffentlichungstag der Anmeldung: **01.08.2007**
(21) Anmeldenummer: 07001645.6
(22) Anmeldetag: 25.01.2007
(51) Int. Cl.: A47K 13/02

(54) **Verfahren zur Herstellung eines Formteils und ein nach diesem Verfahren hergestelltes Formteil**

(30) Priorität: 30.01.2006 DE 102006004475
(71) Anmelder: HAMBERGER INDUSTRIEWERKE GmbH, 83071 Stephanskirchen (DE)
(72) Erfinder: Hamberger, Peter, 83071 Stephanskirchen (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist ein Verfahren zur Herstellung eines Formteils (2), insbesondere eines WC-Sitzes (1) oder eines WC-Deckels, wobei in einem ersten Schritt ein Kern (4) in eine Spritzgießform eingelegt und in einem weiteren Schritt mit einem Duroplast (6) umspritzt wird, der sich mit dem Kern (4) zu dem Formteil (2) ergänzt, sowie ein nach diesem Verfahren hergestelltes Formteil (2) mit einem Kern (4) aus vergleichsweise minderwertigem Material, der von einer Duroplastschicht (6) umgeben ist, die eine hochwertige Außenfläche ausbildet.

## Beschreibung

Die Erfindung betrifft ein Verfahren zur Herstellung eines Formteils gemäß dem Oberbegriff des Patentanspruchs 1 und ein nach einem derartigen Verfahren hergestelltes Formteil nach dem Oberbegriff des Patentanspruchs 10.

Das erfindungsgemäße Verfahren kann prinzipiell zur Herstellung von Formteilen für unterschiedliche Anwendungen Verwendung finden. Das Hauptanwendungsgebiet des Verfahrens dürfte jedoch in der Herstellung von Formteilen für die Sanitärtechnik, beispielsweise von WC-Sitzen oder WC-Deckeln einer WC-Sitzanordnung liegen.

Bei derartigen Formteilen für die Sanitärtechnik handelt es sich in der Regel um relativ massive, solide Artikel, die einerseits eine hinreichende Festigkeit aufweisen und andererseits derart ausgestaltet sein müssen, dass sie dem Benutzer ein Gefühl der Hochwertigkeit vermitteln und eine ansprechende optische Gestaltung aufweisen. Diese Anforderungen setzen ein gewisses Eigengewicht der WC-Sitze und WC-Deckel voraus, das in der Regel durch entsprechende Materialwahl und dickwandige Ausgestaltung der Bauelemente erreicht wird. Aus diesem Grund werden hochwertige WC-Sitze und WC-Deckel meist aus granulatförmigen Duroplasten unter hohem Druck und Temperaturen von über 150°C im Pressverfahren hergestellt, so dass Formteile mit einer großen Dichte entstehen. Derartige Pressverfahren sind jedoch hinsichtlich der Materialaufbereitung und des vorrichtungstechnischen Aufwandes sehr aufwändig, so dass man bei geringeren Qualitätsanforderungen bestrebt ist, die WC-Sitzanordnung im Spritzgießverfahren herzustellen.

Ein derartiges Spritzgießverfahren zur Herstellung einer WC-Sitzanordnung ist beispielsweise aus der DE 197 30 330 C2 der Anmelderin bekannt. Bei diesem bekannten Verfahren wird zunächst ein Kern aus mit einem Thermoplast, beispielsweise Polypropylen (PP), als Bindemittel versetzten Holzpartikeln im Spritzgießverfahren hergestellt. In einem weiteren Arbeitsschritt wird der Kern durch Umspritzen mit einem Thermoplast (z.B. PP) umhüllt. Nachteilig bei derartigen Spritzgießverfahren ist zum Einen, dass die als Umhüllung verwendeten Thermoplaste aufgrund ihrer Makromolekülstruktur mit relativ langen, orientierungslos angeordneten Molekülketten keine ausreichende Oberflächenhärte aufweisen, so dass es beim Einsatz der Formteile zu einer mechanischen Beschädigung, beispielsweise durch ein Verkratzen der Formteiloberfläche kommen kann. Es hat sich weiterhin gezeigt, dass die Oberflächengüte der Umhüllung vielfach nicht den hohen ästhetischen Anforderungen an die geforderten keramikähnlichen Glanzgrade genügt, oder diese nur durch eine aufwändige Oberflächenbehandlung erreicht werden. Weiterhin nachteilig ist, dass derartige Thermoplastumhüllungen vielfach keine ausreichend hohe UV- und Lichtbeständigkeit aufweisen und durch eine ungewünschte Erwärmung, beispielsweise durch Zigarettenglut, örtlich plastisch verformt und dadurch dauerhaft beschädigt werden können.

Demgegenüber liegt der Erfindung die Aufgabe zugrunde, ein Formteil und ein Verfahren zu dessen Herstellung zu schaffen, bei denen gegenüber herkömmlichen Lösungen eine verbesserte Oberflächenhärte und Oberflächengüte bei minimalem vorrichtungstechnischem Aufwand ermöglicht sind.

Diese Aufgabe wird hinsichtlich des Verfahrens zur Herstellung eines Formteils durch die Merkmale des Patentanspruchs 1 und hinsichtlich des nach einem derartigen Verfahren hergestellten Formteils durch die Merkmalskombination des Patentanspruchs 10 gelöst.

Bei einem erfindungsgemäßen Verfahren zur Herstellung eines Formteils, insbesondere eines WC-Sitzes oder eines WC-Deckels, wird in einem ersten Schritt ein Kern in eine Spritzgießform eingebracht oder darin ausgebildet und in einem weiteren Schritt mit einem Duroplast umspritzt, der sich mit dem Kern zu dem Formteil ergänzt. Die erfindungsgemäße Lösung ermöglicht aufgrund der als Mantelmaterial verwendeten Duroplaste die Herstellung von Formteilen mit einer hohen Oberflächenhärte und Oberflächengüte, da die Makro-molekülketten der Duroplaste, gegenüber den im Stand der Technik verwendeten Thermoplasten, in allen Raumrichtungen eng vernetzt sind und dadurch ein dreidimensionales Netzwerk hoher Festigkeit ausbilden, so dass die Oberfläche weitgehend resistent gegen mechanische Beschädigungen wie beispielsweise Kratzer ist und einen keramikähnlichen Glanzgrad aufweist, der auch hohen ästhetischen Ansprüchen genügt. Duroplaste sind weiterhin UV-, licht- sowie chemikalienbeständig und aufgrund ihrer guten Temperaturbeständigkeit gegen thermische Beschädigungen, beispielsweise durch Zigarettenglut, weitgehend resistent.

Gemäß einem besonders bevorzugten Ausführungsbeispiel besteht der Kern aus vergleichsweise niederwertigem Material, wobei die Duroplastschicht eine hochwertige Außenfläche ausbildet. Mit anderen Worten, für den Kernwerkstoff kann ein kostengünstiges Material ohne Qualitätsanforderungen an die Oberfläche Verwendung finden, da die erforderliche Oberflächenqualität des Formteils durch die Umhüllung des Kerns gewährleistet wird. Dadurch können Material, Raumgewicht und Dicke des Kerns gezielt an die geforderten mechanischen Eigenschaften, das gewünschte Gesamtgewicht und den Kostenrahmen des Formteils angepasst werden.

Der Kern besteht vorzugsweise aus Holz oder einem holzartigen Material, insbesondere aus MDF, Harolith^{®}, Werzalit^{®} oder einer Polypropylen-Holzfasermischung.

Bei einem bevorzugten Ausführungsbeispiel wird der Kern in einem Spritzgießverfahren hergestellt.

Gemäß einer alternativen Variante der Erfindung erfolgt die Kernherstellung durch mechanische Bearbeitung eines Vollmaterials (MDF, Holz etc.), beispielsweise durch Fräsen, oder durch Pressen.

Als besonders vorteilhaft hat es sich erwiesen, wenn der Duroplast ein Polyurethan (PUR) oder ein ungesättigtes Polyesterharz (UP) aufweist. Derartige Kunststoffe sind kostengünstig und besitzen ausgezeichnete mechanische und chemische Eigenschaften, so dass die erfindungsgemäßen Formteile weitgehend verschleißfest und dadurch überaus strapazierfähig sind. Das Duroplastmaterial der Umhüllung kann zur farblichen Gestaltung des Formteils mit Zusatzstoffen eingefärbt sein.

Die Duroplastbeschichtung hat vorzugsweise eine Schichtdicke im Bereich von etwa 0,5 bis 3 mm, beispielsweise von 1,5 mm. Durch eine Schichtdicke in diesem Bereich wird eine hochwertige, kratzfeste Formteiloberfläche bei gleichzeitig gegenüber einem Massivbauteil aus Duroplast verringertem Materialbedarf erreicht. Dies führt zu einer erheblichen Kosten-optimierung in der Formteilherstellung.

Vorzugsweise erfolgt das Umspritzen des Kerns durch ein Niederdruckspritzgießverfahren, insbesondere durch ein RIM-Verfahren (Resin Injection Moulding-Verfahren). Bei einem derartigen Niederdruckspritzgießverfahren wird gegenüber dem klassischen Spritzgießen mit Spritzdrücken von über 300 bar bei erheblich geringeren Spritzdrücken gearbeitet (etwa 20 bar). Dadurch wird ein Verzug des Kernmaterials während des Füllens der Werkzeugkavität wirkungsvoll vermieden und eine gleichmäßige Duroplast-beschichtung des Kerns erreicht. Das RIM-Verfahren ist ein Injektionsverfahren, bei dem die hochreaktiven Komponenten des Duroplastes, meist Polyester oder Polyacrylat und Polyisocyanat (Verbinden sich zu Polyurethan), erst unmittelbar vor dem Einspritzen in einem an die Gussform heranführbaren Mischkopf gemischt werden. Durch die Verwendung von hochreaktiven Komponen-ten können die Zykluszeiten bei der Formteilherstellung und dadurch die Stückkosten weiter minimiert werden.

Um die gewünschte Position des Kerns innerhalb der Umhüllung zu gewährleisten, hat es sich als vorteilhaft erwiesen, den Kern während dem Gießvorgang durch Halterungselemente, beispielsweise Haltestifte, in der Gießform zu fixieren.

Bei einem alternativen Spritzgießverfahren wird zunächst eine erste Seite der Umhüllung und nach Rückziehen eines Formeinsatzes in einem weiteren Arbeitsgang die zweite Seite der Umhüllung ausgebildet. Durch den Formeinsatz ist der Kern während des Spritzgießvorganges der ersten Manbtelseite zuverlässig in seiner gewünschten Position fixiert.

Der Kern wird bei einem besonders bevorzugten Ausführungsbeispiel der Erfindung vollständig in dem Duroplast eingebettet, so dass das Formteil eine geschlossene, hochwertige Oberfläche aufweist, die auch höchsten Ansprüchen an die Ästhetik genügt.

Sonstige vorteilhafte Weiterbildungen der Erfindung sind Gegenstand der weiteren Unteransprüche.

Im Folgenden werden bevorzugte Ausführungsbeispiele der Erfindung anhand schematischer Zeichnungen näher erläutert. Es zeigen:
Figur 1 eine dreidimensionale Darstellung eines als WC-Sitz ausgebildeten erfindungsgemäßen Formteils;
Figur 2 eine Schnittdarstellung des WC-Sitzes aus Figur 1;
Figur 3 eine dreidimensionale Darstellung eines als WC-Deckel ausgebildeten erfindungsgemäßen Formteils;
Figur 4 eine Schnittdarstellung des WC-Deckels aus Figur 3 und
Figur 5 einen Verfahrenablauf zur Herstellung der Formteile gemäß den Figuren 1 bis 4.

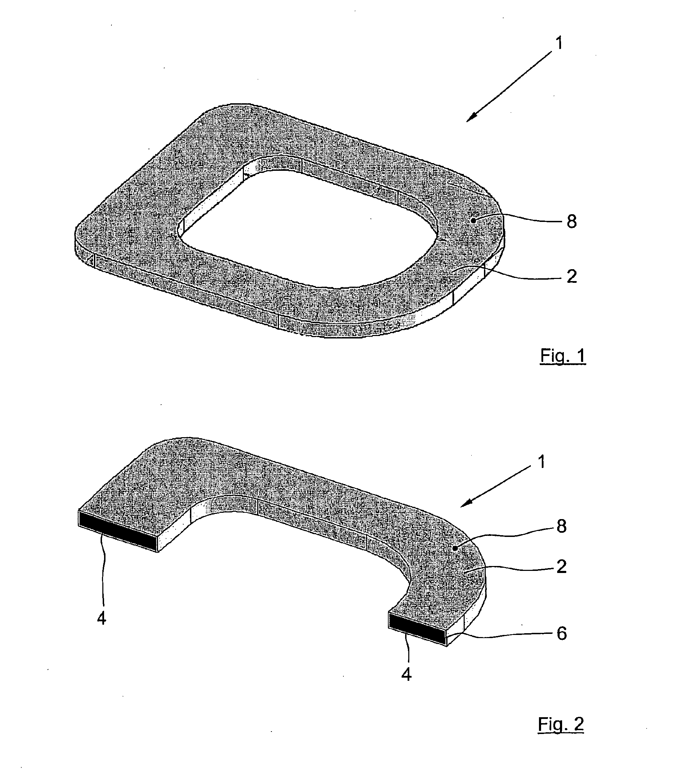

Figur 1 zeigt eine dreidimensionale Darstellung eines als WC-Sitz 1 ausgebildeten erfindungsgemäßen Formteils 2. Der WC-Sitz 1 wird über nicht gezeigte Sitzgelenke an einem WC-Becken (nicht dargestellten) befestigt und hat eine herkömmliche, ringförmige Formgebung.

Wie Figur 2 zu entnehmen ist, die eine Schnittdarstellung des WC-Sitzes 1 aus Figur 1 zeigt, hat dieser einen Kern 4, der von einer Duroplastschicht 6 (Umhüllung) umgeben ist, die eine hochwertige, geschlossene Außenfläche 8 ausbildet. Dadurch kann für den Kern 4 ein kostengünstiges, vergleichsweise minderwertiges Material ohne hohe Qualitätsanforderungen an die Oberfläche Verwendung finden. Die erforderliche Oberflächenqualität und Verschleißfestigkeit des WC-Sitzes 1 ist durch die Umhüllung, d.h. die Duroplastschicht 6 des Kerns 4 gewährleistet. Material, Raumgewicht und Dicke des Kerns 4 können gezielt an die geforderten mechanischen Eigenschaften und das gewünschte Gesamtgewicht des WC-Sitzes 1 angepasst werden. Der Kern 4 besteht bei dem gezeigten Ausführungsbeispiel aus einem holzartigen Material aus mit Holzfasern vermengtem Polypropylen. Dadurch wird ein WC-Sitz 1 mit hoher Steifigkeit durch den Kern 4 und hervorragender Oberflächenhärte und Oberflächengüte durch die Duroplastschicht 6 erreicht, der dem Benutzer ein Gefühl der Hochwertigkeit vermittelt und eine ansprechende Oberfläche mit hoher Verschleißfestigkeit aufweist. Als duroplastisches Material für die Umhüllung 6 können Polyurethan (PUR), ungesättigtes Polyesterharz (UP) oder andere hochfeste Kunststoffe eingesetzt werden.

Bei dem gezeigten WC-Sitz 1 findet für die Umhüllung 6 Polyurethan Verwendung. Polyurethane sind relativ kostengünstige Kunststoffe mit ausgezeichneten mechanischen und chemischen Eigenschaften, so dass die Formteiloberfläche 8 eine hohe Verschleißfestigkeit aufweist und dadurch überaus strapazierfähig ist. Derartige Duroplaste sind weiterhin UV-, lichtsowie chemikalienbeständig und weisen einen keramikähnlichen Glanzgrad auf, der auch hohen ästhetischen Ansprüchen genügt. Das Duroplastmaterial der Umhüllung 6 ist zur farblichen Gestaltung des WC-Sitzes 1 mit Farbpigmenten eingefärbt. Die Polyurethanbeschichtung 6 hat eine Schichtdicke von etwa 1,5 mm, so dass gegenüber einem Massivbauteil aus Duroplast ein wesentlich verringerter Materialbedarf und dadurch eine erhebliche Kostenreduzierung des WC-Sitzes 1 erreicht wird. Der Kern 4 ist gemäß Figur 1 vollständig in dem Duroplast eingebettet, so dass der WC-Sitz 1 eine geschlossene, hochwertige Außenfläche 8 aufweist.

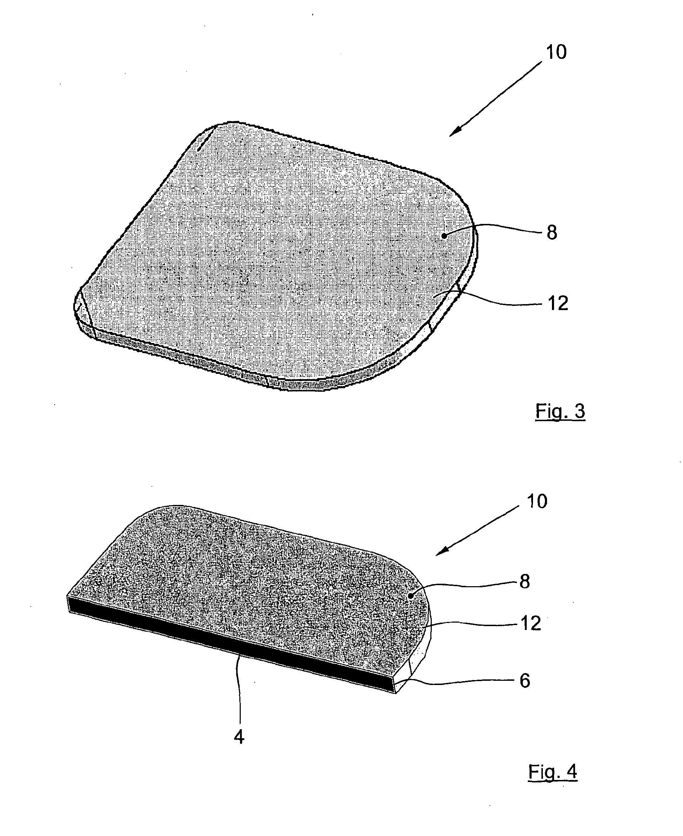

Figur 3 zeigt eine schematische dreidimensionale Darstellung eines als WC-Deckel 10 mit herkömmlicher Formgebung ausgebildeten erfindungsgemäßen Formteils 12. Wie Figur 4 zu entnehmen ist, die eine Schnittdarstellung des WC-Deckels 10 aus Figur 3 zeigt, entspricht der Aufbau des WC-Deckels 10 dem bereits anhand der Figuren 1 und 2 erläuterten Aufbau des WC-Sitzes 1, so dass weitere Ausführungen an dieser Stelle entbehrlich sind.

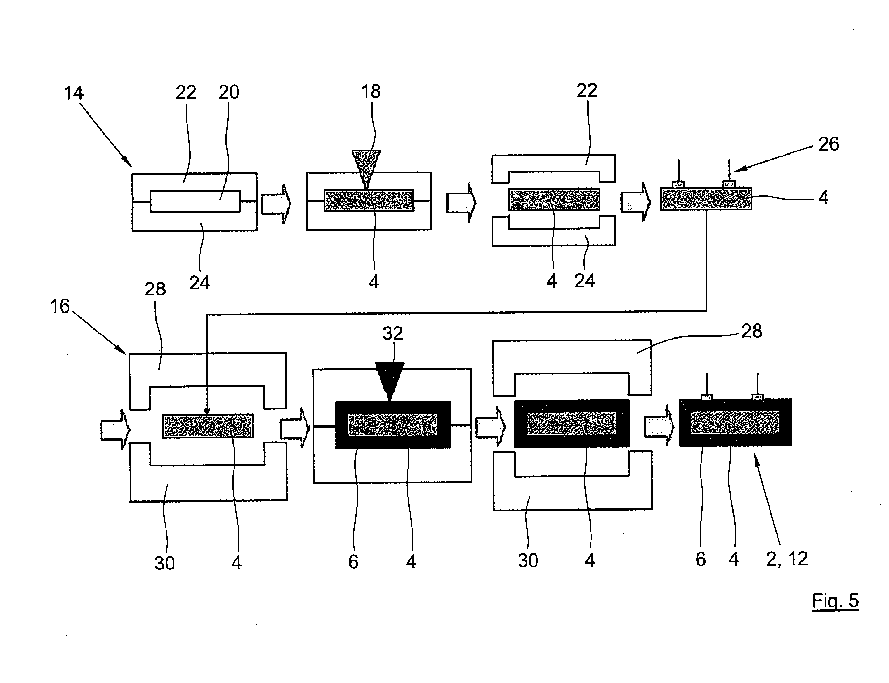

Gemäß Figur 5, die einen Verfahrenablauf zur Herstellung des WC-Sitzes 1 oder des WC-Deckels 10 gemäß der Figuren 1 bis 4 zeigt, erfolgt die Herstellung der Formteile 2, 12, d.h. des WC-Sitzes 1 und des WC-Deckels 10 in einem Spritzgießvorgang. Hierzu sind zwei Spritzgießmaschinen (nicht dargestellt) vorgesehen, wobei in einer Spritzgießform 14 der ersten Spritzgießmaschine der Kern 4 ausgebildet wird und in einer Spritzgießform 16 der zweiten Spritzgießmaschine das Umspritzen des Kerns 4 zum Ausbilden der Duroplastschicht 6 (Umhüllung) durchgeführt wird. Zur Kernherstellung wird in einem ersten Arbeitschritt die zweiteilige Kerngießform 14 geschlossen und eine Polypropylen/Holzfasermischung über eine nicht dargestellte Düse und einen Anguss 18 in die Werkzeugkavität 20 eingespritzt und diese vollständig gefüllt. Nach dem Abkühlen des Kerns 4 werden die Formhälften der Spritzgießform 14 geöffnet und der Kern 4 über ein Handhabungsgerät 26 oder von Hand entnommen und in die ebenfalls zweiteilige, aus einer oberen Formhälfte 28 und einer unteren Formhälfte 30 bestehende Spritzgießform 16 der zweiten Spritzgießmaschine eingelegt. Um die gewünschte Positionierung des Kerns 4 innerhalb der Form 16 zu gewährleisten, wird der Kern 4 während dem Gießvorgang durch nicht dargestellte Haltestifte in der Gussform 16 fixiert. Anschließend werden die beiden Formhälften 28, 30 geschlossen und der Kern 4 über einen Angusspunkt 32 in einem RIM-Niederdruckspritzgussverfahren mit Polyurethan umspritzt, bis eine gleichmäßige Füllung der Werkzeugkavität erreicht ist. Bei dem verwendeten Niederdruckspritzgießverfahren wird gegenüber dem klassischen Spritzgießen mit Spritzdrücken von über 300 bar mit erheblich geringeren Spritzdrücken gearbeitet (etwa 20 bar). Dadurch wird ein Verzug des Kerns 4 vermieden und eine gleichmäßige, porenfreie Umhüllung 6 mit Polyurethan erreicht. Abschließend werden die Formhälften 28, 30 geöffnet und die Formteile 2, 12, d.h. der WC-Sitz 1 oder der WC-Deckel 10 entnommen. Die erfindungsgemäßen Formteile 2, 12 zeichnen sich durch eine gute Verschleißfestigkeit und hohe Oberflächengüte aus.

Das erfindungsgemäße Verfahren ist nicht auf die beschriebene Kernherstellung im Spritzgießverfahren beschränkt, vielmehr kann jedes aus dem Stand der Technik bekannte Verfahren, insbesondere eine mechanische Bearbeitung aus einem Vollmaterial, beispielsweise durch Fräsen, Pressen etc. zur Kernherstellung Verwendung finden. Erfindungswesentlich ist, dass der Kern 4 in eine Spritzgießform 16 eingelegt und mit einem Duroplast 6 umspritzt wird, so dass ein Formteil 2, 12 mit einem vergleichsweise minderwertigem Kern 4 und einer hochwertigen Außenfläche 8 entsteht.

Offenbart ist ein Verfahren zur Herstellung eines Formteils 2, 12, insbesondere eines WC-Sitzes 1 oder eines WC-Deckels 10, wobei in einem ersten Schritt ein Kern 4 in eine Spritzgießform 16 eingelegt und in einem weiteren Schritt mit einem Duroplast 6 umspritzt wird, der sich mit dem Kern 4 zu dem Formteil 2, 12 ergänzt, sowie ein nach diesem Verfahren hergestelltes Formteil 2, 12 mit einem Kern 4 aus vergleichsweise minderwertigem Material, der von einer Duroplastschicht 6 umgeben ist, die eine hochwertige Außenfläche 8 ausbildet.

### Bezugszeichenliste

- 1: WC-Sitz
- 2: Formteil
- 4: Kern
- 6: Duroplastschicht
- 8: Außenfläche
- 10: WC-Deckel
- 12: Formteil
- 14: Spritzgießform (Kern)
- 16: Spritzgießform (Umhüllung)
- 18: Anguss
- 20: Werkzeugkavität
- 22: Formhälfte (Kern/oben)
- 24: Formhälfte (Kern/unten)
- 26: Handhabungsgerät
- 28: Formhälfte (oben)
- 30: Formhälfte (unten)
- 32: Angusspunkt

## Patentansprüche

1. Verfahren zur Herstellung eines Formteils (2, 12), insbesondere eines WC-Sitzes (1) oder eines WC-Deckels (10) mit den Schritten:
- Einbringen eines Kerns (4) in eine Spritzgießform (16);
- Umspritzen des Kerns (4) mit einem Duroplast (6), der sich mit dem Kern (4) zu dem Formteil (2, 12) ergänzt.

2. Verfahren nach Anspruch 1, wobei der Kern (4) aus vergleichsweise niederwertigem Material ist und die Duroplastschicht (6) eine hochwertige Außenfläche (8) ausbildet.

3. Verfahren nach Anspruch 1 oder 2, wobei der Duroplast (6) ein Polyurethan (PUR) oder ein ungesättigtes Polyesterharz (UP) ist.

4. Verfahren nach einem der vorhergehenden Ansprüche, wobei die Duroplastbeschichtung (6) eine Schichtdicke im Bereich von etwa 0,5 bis 3 mm, vorzugsweise von 1,5 mm aufweist.

5. Verfahren nach einem der vorhergehenden Ansprüche, wobei der Kern (4) vollständig in dem Duroplast (6) eingebettet ist.

6. Verfahren nach einem der vorhergehenden Ansprüche, wobei das Umspritzen des Kerns (4) durch ein Niederdruckspritzgießverfahren, insbesondere durch ein RIM-Verfahren (Resin Injection Moulding-Verfahren) erfolgt.

7. Verfahren nach einem der vorhergehenden Ansprüche, wobei der Kern (4) vor dem Spritzgießvorgang durch Halterungselemente, insbesondere Haltestifte, in der Gussform (16) fixiert ist.

8. Verfahren nach einem der vorhergehenden Ansprüche, wobei der Kern (4) aus Holz oder einem holzartigen Material, insbesondere MDF, Harolith^{®}, Werzalit^{®} oder einer Polypropylen-Holzfasermischung ist.

9. Verfahren nach einem der vorhergehenden Ansprüche, wobei der Kern (4) in einem Spritzgießverfahren hergestellt wird.

10. Formteil (2, 12) hergestellt nach einem Verfahren gemäß einem der vorhergehenden Ansprüche, mit einem Kern (4) aus vergleichsweise minderwertigem Material, der von einer Duroplastschicht (6) umgeben ist, die eine hochwertige Außenfläche (8) ausbildet.
